(19) Europäisches Patentamt
European Patent Office
Office européen des brevets

(11) **EP 2 725 839 B1**

(12) **EUROPEAN PATENT SPECIFICATION**

(45) Date of publication and mention
of the grant of the patent:
**02.11.2016 Bulletin 2016/44**

(21) Application number: **12803289.3**

(22) Date of filing: **10.04.2012**

(51) Int Cl.:
*H04W 24/00* (2009.01)     *H04B 1/7087* (2011.01)
*H04B 1/7075* (2011.01)     *H04B 1/7073* (2011.01)

(86) International application number:
**PCT/CN2012/073722**

(87) International publication number:
**WO 2012/174922 (27.12.2012 Gazette 2012/52)**

(54) **PREAMBLE DETECTION METHOD AND SYSTEM**

PRÄAMBELERKENNUNGSVERFAHREN UND -SYSTEM

PROCÉDÉ ET SYSTÈME DE DÉTECTION DE PRÉAMBULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.06.2011 CN 201110167886**

(43) Date of publication of application:
**30.04.2014 Bulletin 2014/18**

(73) Proprietor: **ZTE Microelectronics Technology Co.,
Ltd
Shenzhen (CN)**

(72) Inventors:
• **JIANG, Renqing
Shenzhen
Guangdong 518057 (CN)**
• **SHI, Yijun
Shenzhen
Guangdong 518057 (CN)**

(74) Representative: **Lavoix
Bayerstrasse 83
80335 München (DE)**

(56) References cited:
**CN-A- 101 022 674**     **CN-A- 101 026 391**
**CN-A- 101 136 689**     **CN-A- 102 223 654**
**US-A1- 2010 215 127**

**Description**

**TECHNICAL FIELD**

The disclosure relates to the field of mobile communications, and in particular to a method and a system for detecting a preamble.

**BACKGROUND**

In a Wideband Code Division Multiple Access (WCDMA) system, a User Equipment (UE) accesses the WCDMA system through a Physical Random Access Channel (PRACH).

Before the UE accesses a cell of the WCDMA system, the UE needs to transmit a preamble to a base station through the PRACH. The base station detects the preamble to determine whether there is a UE requesting access. If the base station does not detect that there is a UE requesting access, the base station does not transmit an Acquisition Indicator (AI) to the UE. Then, the UE increases the transmitting power of the preamble according to a step-length indicated by the base station, and retransmits the preamble within a next allocated access timeslot until the UE receives the AI from the base station or the number of transmitting the preamble reaches an allowed maximum number or a transmitting power exceeds a maximum allowed power. If the base station detects that there is a UE requesting access, the base station transmits the AI through an Acquisition Indicator Channel (AICH) to notify the UE to transmit a random access message. So far, the detection process of the preamble is completed.

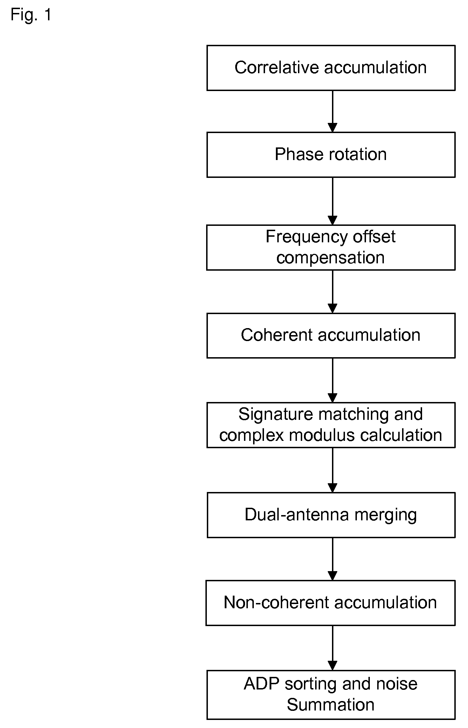

Fig. 1 shows a flowchart of a detection scheme of preamble in the related art. As shown in Fig. 1, the existing detection scheme of preamble mainly includes performing correlative accumulation, phase rotation, frequency offset (frequency bin) compensation, coherent accumulation, signature matching and non-coherent accumulation on the preamble successively using a preamble detection integral operation algorithm. An Amplitude Delay Profile (ADP) is obtained at each sampling position. If there are multiple frequency offsets, it is needed to repeat the above operation process for each frequency offset.

In the existing detection scheme of preamble, a preamble detection integral operation for a single antenna can be expressed as:

$$x_n = \sum_{m=0}^{4096/N_c-1} \left| \sum_{j=0}^{15} \left( \sum_{k=0}^{N_c/256-1} \left( \sum_{i=0}^{15} y\left(256k+m*N_c+16i+j\right)c^*\left(256k+m*N_c+16i+j\right)e^{-j\left(\frac{\pi}{4}+\frac{\pi}{2}(256k+m*Nc+16i+j)\right)} \right)e^{-j2\pi f_e t} \right)s_n^j \right|$$

where $y(256k + m*N_c+16i + j)$ represents basic chip data; $c^*(256k + m*N_c + 16_i + j)$ represents the conjugate of a scrambling code; i represents the sequence number of 16-chip data used for descrambling (each signature component includes 16 chips); in $e^{-j\left(\frac{\pi}{4}+\frac{\pi}{2}(256k+m*Nc+16i+j)\right)}$, the first j represents an unit imaginary number, and the second j represents the sequence number of a signature component (each signature includes 16 signature components); k represents the sequence number of symbols of coherent accumulation; m represents the sequence number of groups participating in non-coherent accumulation, and m=0,1...4096/$N_c$-1; $f_e$ represents compensated frequency offset; $N_c$ represents the coherent accumulation length; and $s_n^j$ represents the j-th component of signature n, and n=0,1,..., 15.

In an actual application of the WCDMA system, it is generally needed to select the number of frequency offsets and a position based on the number of sectors and a cell radius. For one same PRACH, when the detection of preamble is performed using different frequency offsets, the used preamble and search window are the same. In this condition, the existing detection scheme of preamble would cause two problems as follows.

1. Since phase rotation is associated with each of 4096 chips, the calculation process is complex, a lot of hardware resources are occupied, and the processing process is slow.
2. A set of hardware resources complete the detection process of preamble of a frequency offset in series. When switched to a different frequency offset to perform preamble detection, the operation of fetching 4096 chips, the operation of fetching search window data and the processing result of correlative accumulation cannot be shared, thus it is needed to complete a lot of repeated work. A set of hardware resources needs to be added each time when a frequency offset is added. Therefore, work efficiency is low.

The state of the prior art may be known from the following documents:

US 2010/215127 A1 discloses a method for estimating a carrier-frequency offset in a telecommunication signals receiver, and the method comprises the following steps: computation of the partial correlations relating to several successive portions of a reference binary sequence, each partial correlation being computed between a portion of a signal received by the receiver at said carrier frequency, this signal comprising said reference binary sequence, and a predetermined portion of said reference binary sequence stored and/or generated by the receiver, in several possible relative positions between the received signal and the predetermined portion, and determination of the carrier-frequency offset from the computed partial correlations. It also comprises a step of selecting a synchronization position and the determination step comprises the estimation of a phase shift between computed partial correlations at the selected synchronization position.

## SUMMARY

In view of the above, the disclosure is intended to provide a method and a system for detecting a preamble, which can implement detecting of the preamble in a WCDMA system efficiently.

To this end, the technical solutions of the disclosure are implemented as follows.

The disclosure provides a method for detecting a preamble, which includes:

chips of the preamble are divided into a plurality of chip blocks, and correlative accumulation is performed on the plurality of chip blocks to obtain multiple groups of partial products of signature components;

compensation of positive frequency offset is performed on each group of the multiple groups of partial products of signature components to obtain multiple groups of compensation results of positive frequency offset, and compensation of negative frequency offset is performed on the multiple groups of partial products of signature components to obtain multiple groups of compensation results of negative frequency offset; and

coherent accumulation, phase rotation, signature matching and complex modulus calculation, and dual-antenna merging are performed on the multiple groups of compensation results of positive frequency offset, and the coherent accumulation, the phase rotation, the signature matching and the complex modulus calculation, and the dual-antenna merging are performed on the multiple groups of compensation results of negative frequency offset.

In the method, the step that compensation of positive frequency offset is performed on each group of the multiple groups of partial products of signature components and compensation of negative frequency offset is performed on each group of the multiple groups of partial products of signature components may include:

each group of partial products of signature components of 16 groups of partial products of signature components obtained after the correlative accumulation are multiplied by frequency offset compensation values $e^{-j2\pi f_e t_k}$ and $e^{-j2\pi(-f_e)t_k}$ respectively.

In the method, the step that coherent accumulation, phase rotation, signature matching and complex modulus calculation, and dual-antenna merging are performed on the multiple groups of compensation results of positive frequency offset and the coherent accumulation, the phase rotation, the signature matching and the complex modulus calculation, and the dual-antenna merging on the multiple groups of compensation results of negative frequency offset may include:

the coherent accumulation is performed on 16 groups of compensation results of positive frequency offset and performing the coherent accumulation on 16 groups of compensation results of negative frequency offset;

the phase rotation is performed respectively on the results obtained after the coherent accumulation, using a phase rotation factor $e^{-j(\frac{\pi}{4}+\frac{\pi}{2}j)}$;

the signature matching and the complex modulus calculation are performed respectively on the result obtained after the phase rotation; and

the dual-antenna merging is performed respectively on the results obtained after the signature matching and the complex modulus calculation.

In the method, the step that the coherent accumulation is performed on the multiple groups of compensation results of positive frequency offset and the coherent accumulation is performed on the multiple groups of compensation results of negative frequency offset may include:

the coherent accumulation of partial products of same signature components is performed on the 16 groups of compensation results of positive frequency offset and the coherent accumulation of partial products of same signature components is performed on the 16 groups of compensation results of negative frequency offset; if a coherent accumulation length $N_c$ is equal to 4096, the coherent accumulation is performed on 16 partial products of signature components j belonging to same frequency offset, to output a group of 16 partial products of signature components for positive frequency offset and output a group of 16 partial products of signature components for negative frequency offset; if the coherent accumulation length $N_c$ is equal to 2048, the coherent accumulation is performed on first 8 partial products of the signature components j belonging to the same frequency offset and performing the coherent accumulation on last 8 partial products of the signature components j belonging to the same frequency offset, to output two groups of 16 partial products of signature components for positive frequency offset and output two groups of 16 partial products of signature components for negative frequency offset.

In the method, the step that phase rotation is performed respectively on the results obtained after the coherent accumulation may include:

partial products of signature components corresponding to j is rotated by $-(\frac{\pi}{4} + \frac{\pi}{2} j)$ degrees according to a value of a sequence number j of 16 signature components; if a coherent accumulation length $N_c$ is equal to 4096, a group of 16 partial products of signature components is output for positive frequency offset and a group of 16 partial products of signature components is output for negative frequency offset; if the coherent accumulation length $N_c$ is equal to 2048, two groups of 16 partial products of signature components are output for positive frequency offset and two groups of 16 partial products of signature components are output for negative frequency offset.

In the method, the step that the signature matching and the complex modulus calculation are performed respectively on the result obtained after the phase rotation may include:

the phase rotation result of positive frequency offset and the phase rotation result of negative frequency offset are multiplied respectively by a Hadamard matrix:

$$\begin{bmatrix} hat(15) & hat(14) & . & . & hat(0) \end{bmatrix} = \begin{bmatrix} rot(15) & rot(14) & . & . & rot(0) \end{bmatrix} \begin{bmatrix} s_{15}^{15} & s_{14}^{15} & . & . & s_{0}^{15} \\ s_{15}^{14} & . & . & . & . \\ . & . & . & . & . \\ . & . & . & . & . \\ s_{15}^{0} & s_{14}^{0} & . & . & s_{0}^{0} \end{bmatrix}$$

where, rot(15), rot(14), ......, rot(0) represent 16 partial products of signature components output after the phase rotation; hat(15), hat(14), ......, hat(0) represent the results obtained after the signature matching; and $s_n^j$ represents a j-th component of signature n, where n=0, 1, ..., 15, and j=0, 1, ..., 15; and
the complex modulus calculation is performed on the result obtained after the signature matching; if a coherent accumulation length $N_c$ is equal to 4096, a group of 16 partial products of signatures is output for positive frequency offset and a group of 16 partial products of signatures is output for negative frequency offset; if the coherent accumulation length $N_c$ is equal to 2048, two groups of 16 partial products of signatures are output for positive frequency offset and two groups of 16 partial products of signatures are output for negative frequency offset.

In the method, the step that the dual-antenna merging is performed respectively on the results obtained after the signature matching and the complex modulus calculation may include:

after the signature matching and the complex modulus calculation are completed, an average of results of two antennas subjected to the signature matching and the complex modulus calculation is calculated in each partial product of signature components; if a coherent accumulation length $N_c$ is equal to 4096, a group of 16 partial products of signatures is output for positive frequency offset and a group of 16 partial products of signatures is output for negative frequency offset; if the coherent accumulation length $N_c$ is equal to 2048, two groups of 16 partial products of signatures are output for positive frequency offset and two groups of 16 partial products of signatures are output for negative frequency offset.

In the method, the method may further include: when the coherent accumulation length $N_c$ is equal to 2048, non-coherent accumulation is performed on two groups of multiple partial products of signatures, wherein the two groups of multiple partial products of signatures are obtained by completing the dual-antenna merging for same frequency offset.

In the method, the step that non-coherent accumulation is performed on two groups of multiple partial products of signatures may include:

for each of positive frequency offset and negative frequency offset, there are two groups of 16 partial products of signatures after the signature matching is completed; the non-coherent accumulation is performed on the two groups of 16 partial products of signatures obtained after the dual-antenna merging for same frequency offset, to output a group of 16 Amplitude Delay Profiles (ADPs) for positive frequency offset and output a group of 16 ADPs for negative frequency offset.

The method may further include:

maximum ADP and noise data are calculated, and the maximum ADP and the noise data are reported to a relevant subsystem.

In the method above, the step that maximum ADP and noise data are calculated and the maximum ADP and the noise data are reported to a relevant subsystem may include:

ADPs corresponding to same signatures and same frequency offset which are obtained by performing preamble detection on all search positions of a same preamble detection task are sorted to obtain 16 maximum ADPs; 512 maximum ADPs are obtained according to 256 maximum ADPs corresponding to positive frequency offset and 256 maximum ADPs corresponding to negative frequency offset; cumulative accumulation is performed on remaining ADPs obtained after the 256 maximum ADPs corresponding to positive frequency offset are removed from all ADPs corresponding to positive frequency offset, to obtain noise data of positive frequency offset, and the cumulative accumulation is performed on remaining ADPs obtained after the 256 maximum ADPs corresponding to negative frequency offset are removed from all ADPs corresponding to negative frequency offset, to obtain noise data of negative frequency offset; and the 512 maximum ADPs and the two noise data are packaged and the packaged 512 maximum ADPs and two noise data are reported to a relevant subsystem.

The disclosure also provides a system for detecting a preamble, which includes: a correlative accumulation unit, a compensation unit and a concurrent processing unit, wherein the correlative accumulation unit is configured to divide chips of the preamble into a plurality of chip blocks and perform correlative accumulation on the chip blocks to obtain multiple groups of partial products of signature components; the compensation unit is configured to: perform compensation of positive frequency offset on each group of the multiple groups of partial products of signature components, to obtain multiple groups of compensation results of positive frequency offset; and perform compensation of negative frequency offset on each group of the multiple groups of partial products of signature components, to obtain multiple groups of compensation results of negative frequency offset; and the concurrent processing unit is configured to perform coherent accumulation, phase rotation, signature matching and complex modulus calculation, and dual-antenna merging on the multiple groups of compensation results of positive frequency offset, and perform the coherent accumulation, the phase rotation, the signature matching and complex modulus calculation, and the dual-antenna merging on the multiple groups of compensation results of negative frequency offset.

In the system, the concurrent processing unit may further include:

a first processing unit configured to perform the coherent accumulation, the phase rotation, the signature matching and the complex modulus calculation, and the dual-antenna merging on the multiple groups of compensation results of positive frequency offset; and
a second processing unit configured to perform the coherent accumulation, the phase rotation, the signature matching and the complex modulus calculation, and the dual-antenna merging on the multiple groups of compensation results of negative frequency offset.

The system may further include:

a non-coherent accumulation unit configured to, when the coherent accumulation length $N_c$ is equal to 2048, perform non-coherent accumulation on two groups of multiple partial products of signatures, wherein the two groups of multiple partial products of signatures are obtained by completing the dual-antenna merging for same frequency offset; and
a sorting-and-noise-accumulation unit configured to calculate maximum ADP and noise data and to report the maximum ADP and noise data to a relevant subsystem.

With the method and the system for detecting a preamble provided by the disclosure, chips of a preamble are divided into a plurality of chip blocks, and correlative accumulation is performed on the plurality of chip blocks to obtain multiple groups of partial products of signature components; compensation of positive frequency offset is performed on each group of the multiple groups of partial products of signature components to obtain multiple groups of compensation results of positive frequency offset, and compensation of negative frequency offset is performed on each group of the multiple groups of partial products of signature components to obtain multiple groups of compensation results of negative frequency offset; and coherent accumulation, phase rotation, signature matching and complex modulus calculation, and dual-antenna merging are performed on the multiple groups of compensation results of positive frequency offset, and the coherent accumulation, the phase rotation, the signature matching and the complex modulus calculation, and the dual-antenna merging are performed on the multiple groups of compensation results of negative frequency offset. That is, the compensation of positive frequency offset and subsequent processing and operations thereof are performed on each group of the multiple groups of partial products of signature components and the compensation of negative frequency offset and subsequent processing and operations thereof are performed on each group of the multiple groups of partial products of signature components, so that a processing speed can be doubled to efficiently implement the detection of the preamble in a WCDMA system. When processing of a type of frequency offset is added, it is only needed to add one set of hardware resources in the steps of coherent accumulation, phase rotation, signature matching and complex modulus calculation, and dual-antenna merging. Compared with the existing method of adding a whole set of resources, the disclosure doubles the processing speed without doubling the hardware resource. Therefore, the disclosure can reduce a cost, has a good expansibility, and can flexibly configure the number of frequency offsets for concurrent processing.

**BRIEF DESCRIPTION OF THE DRAWINGS**

Fig. 1 shows a flowchart of a detection scheme of preamble in the related art;

Fig. 2 shows a flowchart of a method for detecting a preamble according to the disclosure;

Fig. 3 shows a specific process of the method for detecting a preamble according to the disclosure; and

Fig. 4 shows a structural diagram of a system for detecting a preamble according to the disclosure.

**DETAILED DESCRIPTION**

The basic idea of the disclosure is: chips of a preamble are divided into a plurality of chip blocks, and correlative accumulation is performed on the plurality of chip blocks to obtain multiple groups of partial products of signature components; compensation of positive frequency offset is performed on each group of the multiple groups of partial products of signature components to obtain multiple groups of compensation results of positive frequency offset, and compensation of negative frequency offset is performed on each group of the multiple groups of partial products of signature components to obtain multiple groups of compensation results of negative frequency offset; and coherent accumulation, phase rotation, signature matching and complex modulus calculation, and dual-antenna merging are performed on the multiple groups of compensation results of positive frequency offset, and the coherent accumulation, the phase rotation, the signature matching and the complex modulus calculation, and the dual-antenna merging are performed on the multiple groups of compensation results of negative frequency offset.

The disclosure is further elaborated below with reference to the drawings and specific embodiments.

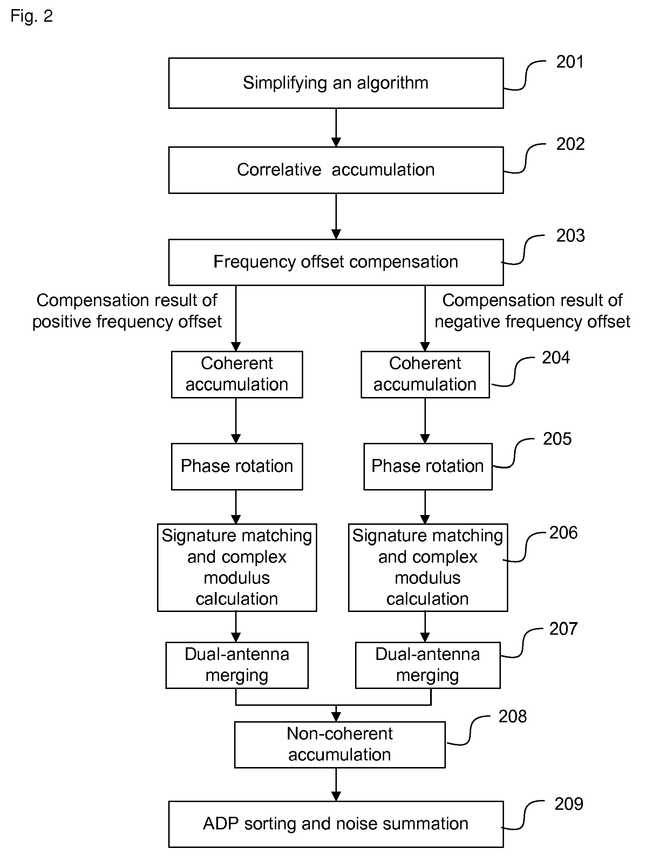

The disclosure provides a method for detecting a preamble. Fig. 2 shows a flowchart of the method for detecting a preamble according to the disclosure. As shown in Fig. 2, the method includes the following steps:

Step 201: A preamble detection integral operation algorithm is simplified.

Specifically, the phase rotation factor $e^{-j(\frac{\pi}{4}+\frac{\pi}{2}(256k+m*Nc+16i+j))}$ in the existing preamble detection integral operation algorithm is simplified as $e^{-j(\frac{\pi}{4}+\frac{\pi}{2}j)}$. The simplified preamble detection integral operation algorithm is as follows:

$$x_n = \sum_{m=0}^{4096/N_c-1} \left| \sum_{j=0}^{15} \left( \sum_{k=0}^{N_c/256-1} \left( \sum_{i=0}^{15} y(256k+m*N_c+16i+j)c^*(256k+m*N_c+16i+j) \right) e^{-j2\pi f_e t_k} \cdot e^{-j(\frac{\pi}{4}+\frac{\pi}{2}j)} \right) s_n^j \right|$$

In this way, the phase rotation factor, which originally is correlated to each chip, now is merely correlated to signature component j, thus simplifying the preamble detection integral operation algorithm.

Step 202: Chips of a preamble are divided into a plurality of chip blocks, and correlative accumulation is performed on the plurality of chip blocks to obtain multiple groups of partial products of signature components.

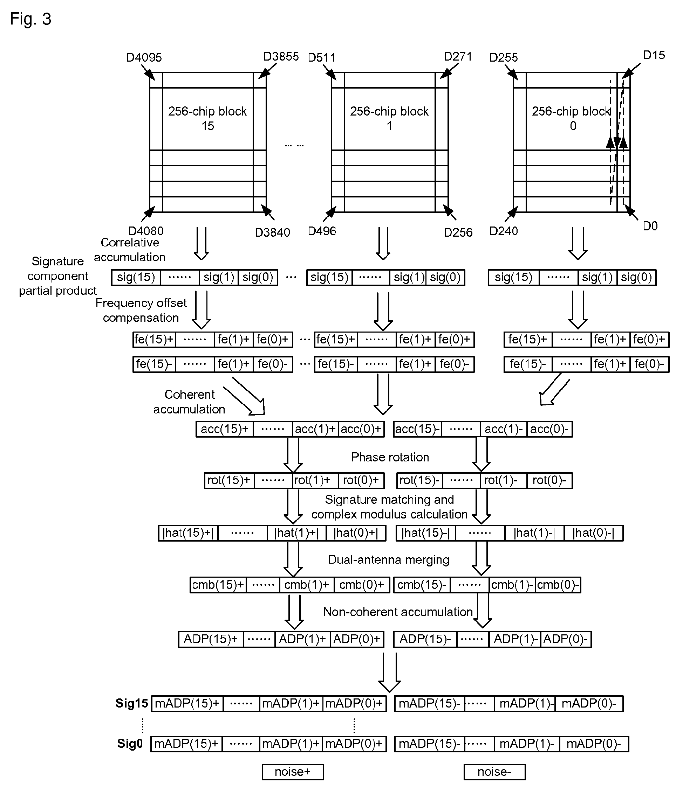

Specifically, according to the order of block15, block14, ... ..., block0, 4096 chips of the preamble are divided into 16 256-chip blocks and are cached. Each 256-chip block includes 16 lines and 16 columns of 256 chips. As shown in Fig. 3, in the 16 256-chip blocks, chips are sorted in each 256-chip block from right to left and from bottom to top in the ascending order of the sequence number of 4096 chips.

According to a 3GPP protocol, 4096 $C_{long,1,n}$ scrambles can be generated. The generated scrambles are cached by the same way as the 4096 chips of the preamble.

The cached 4096 chips and the cached 4096 scrambles are multiplied correspondingly, that is, the p-th chip is multiplied by the p-th scramble, where p=0, 1, ..., 4095. As shown in Fig. 3, the product of each chip and the corresponding scramble in one same line of each 256-chip block is summated to obtain 16 groups of 16 partial products of signature components.

In this embodiment, the partial product refers to the accumulated value obtained after each step in the detecting process of the preamble.

Step 203: Compensation of positive frequency offset is performed on each group of the multiple groups of partial products of signature components, to obtain multiple groups of compensation results of positive frequency offset, and compensation of negative frequency offset is performed on each group of the multiple groups of partial products of signature components, to obtain multiple groups of compensation results of negative frequency offset.

Specifically, compensation of positive frequency offset and compensation of negative frequency offset are performed respectively on each group of 16 partial products of signature components of the 16 groups of 16 partial products of signature components obtained after the correlative accumulation based on the precision of 256-chip. That is, each group of partial products of signature components is multiplied by frequency offset compensation values $e^{-j2\pi f_e t_k}$ and $e^{-j2\pi (f_e)t_k}$ respectively. As shown in Fig. 3, after the compensation of positive frequency offset and compensation of negative frequency offset are completed, 16 groups of compensation results of positive frequency offset and 16 groups of compensation results of negative frequency offset are output respectively.

Step 204: Coherent accumulation is performed on the multiple groups of compensation results of positive frequency offset and the coherent accumulation is performed on the multiple groups of compensation results of negative frequency offset.

Specifically, in an actual application, a set of hardware resources can be added to respectively perform coherent accumulation of partial products of same signature components on the 16 groups of compensation results of positive frequency offset and the 16 groups of compensation results of negative frequency offset. The coherent accumulation length $N_c$ may have different values in the coherent accumulation computation. In the embodiment, $N_c$= 4096 and $N_c$= 2048 are taken for examples. During coherent accumulation, if the coherent accumulation length $N_c$ is equal to 4096, the coherent accumulation is performed on 16 partial products of signature components j belonging to the same frequency offset. If the coherent accumulation length $N_c$ is equal to 2048, the coherent accumulation is performed on first 8 partial products of the signature components j belonging to the same frequency offset and the coherent accumulation is performed on last 8 partial products of the signature components j belonging to the same frequency offset. As shown in Fig. 3, after the coherent accumulation is completed, if the coherent accumulation length $N_c$ is equal to 4096, a group of 16 partial products of signature components is output for positive frequency offset and a group of 16 partial products of signature components is output for negative frequency offset. If the coherent accumulation length $N_c$ is equal to 2048, two groups of 16 partial products of signature components are output for positive frequency offset and two groups of 16 partial products of signature components are output for negative frequency offset.

Step 205: The phase rotation is performed respectively on the results obtained after the coherent accumulation, using a phase rotation factor $e^{-j(\frac{\pi}{4}+\frac{\pi}{2}j)}$.

Specifically, since the preamble detection integral operation algorithm is simplified in Step 201, phase rotation is performed respectively on the results of positive frequency offset and negative frequency offset obtained after the coherent accumulation, using the simplified phase rotation factor $e^{-j(\frac{\pi}{4}+\frac{\pi}{2}j)}$. That is, partial products of signature components corresponding to j are rotated by $-(\frac{\pi}{4}+\frac{\pi}{2}j)$ degrees according to the value of the sequence number (the second j in the simplified preamble detection integral operation algorithm) of 16 signature components in each group of signature components. As shown in Fig. 3, after the phase rotation is completed, if the coherent accumulation length $N_c$ is equal to 4096, a group of 16 partial products of signature components is output for positive frequency offset and a group of 16 partial products of signature components is output for negative frequency offset; if the coherent accumulation length $N_c$ is equal to 2048, two groups of 16 partial products of signature components are output for positive frequency offset and two groups of 16 partial products of signature components are output for negative frequency offset.

Step 206: Signature matching and complex modulus calculation are performed respectively on the result obtained after the phase rotation.

Specifically, the signature matching is performed on the phase rotation result of positive frequency offset and the phase rotation result of negative frequency offset respectively. That is, the phase rotation result of positive frequency offset and the phase rotation result of negative frequency offset are multiplied by a Hadamard matrix respectively; here, the Hadamard matrix may be:

$$\begin{bmatrix} hat(15) & hat(14) & . & . & hat(0) \end{bmatrix} = \begin{bmatrix} rot(15) & rot(14) & . & . & rot(0) \end{bmatrix} \begin{bmatrix} s_{15}^{15} & s_{14}^{15} & . & . & s_0^{15} \\ s_{15}^{14} & . & . & . & . \\ . & . & . & . & . \\ . & . & . & . & . \\ s_{15}^0 & s_{14}^0 & . & . & s_0^0 \end{bmatrix}$$

where, rot(15), rot(14) ,......, rot(0) represent 16 partial products of signature components output after the phase rotation; hat(15), hat(14), ......, hat(0) represent the results obtained after the signature matching; and $s_n^j$ represents the j-th component of signature n, where n=0, 1, ..., 15 and j=0, 1, ..., 15.

As shown in Fig. 3, the complex modulus calculation needs to be performed after the signature matching. If the coherent accumulation length $N_c$ is equal to 4096, a group of 16 partial products of signatures is output for positive frequency offset and a group of 16 partial products of signatures is output for negative frequency offset. If the coherent accumulation length $N_c$ is equal to 2048, two groups of 16 partial products of signatures are output for positive frequency offset and two groups of 16 partial products of signatures are output for negative frequency offset.

Step 207: Dual-antenna merging is performed respectively on the results obtained after the signature matching and the complex modulus calculation.

Specifically, each chip includes a group of dual-antenna data. After the signature matching and the complex modulus calculation are completed, the dual-antenna merging is performed respectively on the results obtained after the signature matching and the complex modulus. That is, the average of results of two antennas subjected to the signature matching and the complex modulus calculation is calculated in each partial product of signature components. As shown in Fig. 3, after the dual-antenna merging is completed, if the coherent accumulation length $N_c$ is equal to 4096, a group of 16 partial products of signatures is output for positive frequency offset and a group of 16 partial products of signatures is output for negative frequency offset; if the coherent accumulation length $N_c$ is equal to 2048, two groups of 16 partial products of signatures are output for positive frequency offset and two groups of 16 partial products of signatures are output for negative frequency offset.

Step 208: If the coherent accumulation length $N_c$ is equal to 4096, after the dual-antenna merging is completed, a group of 16 partial products of signatures is obtained for positive frequency offset and a group of 16 partial products of signatures is obtained for negative frequency offset. Here, since there is only one group of 16 partial products of signatures for positive frequency offset and there is only one group of 16 partial products of signatures for negative frequency offset, no non-coherent accumulation processing needs to be performed.

As shown in Fig. 3, if the coherent accumulation length $N_c$ is equal to 2048, non-coherent accumulation is performed on two groups of multiple partial products of signatures, wherein the two groups of multiple partial products of signatures are obtained by completing the dual-antenna merging for same frequency offset. Specifically, for each of positive frequency offset and negative frequency offset, there are two groups of 16 partial products of signatures after the signature matching is completed, then non-coherent accumulation is performed on the two groups of 16 partial products of signatures obtained after the dual-antenna merging is completed for same frequency offset, to output a group of 16 ADPs for positive frequency offset and output a group of 16 ADPs for negative frequency offset.

Step 203 to Step 208 are necessary for 4096 chips of all preamble search positions of a same preamble detection task, and the results obtained after Step 203 to Step 208 are aggregated in Step 209.

Step 209: Maximum ADP and noise data is calculated, and the maximum ADP and the noise data are reported to a relevant subsystem.

Specifically, ADPs corresponding to same signatures and same frequency offset which are obtained by performing preamble detection on all search positions of a same preamble detection task are sorted to obtain 16 maximum ADPs. 512 maximum ADPs are obtained according to 256 maximum ADPs corresponding to positive frequency offset and 256 maximum ADPs corresponding to negative frequency offset. Then, cumulative accumulation is performed on remaining ADPs obtained after the 256 maximum ADPs corresponding to positive frequency offset are removed from all ADPs corresponding to positive frequency offset, to obtain noise data of positive frequency offset, and the cumulative accumulation is performed on remaining ADPs obtained after the 256 maximum ADPs corresponding to negative frequency offset are removed from all ADPs corresponding to negative frequency offset, to obtain noise data of negative frequency offset. Finally, the 512 maximum ADPs and the two noise data are packaged and then reported to the relevant subsystem, so that the relevant subsystem can determine whether a preamble exists, and a preamble position is calculated and frequency offset is estimated.

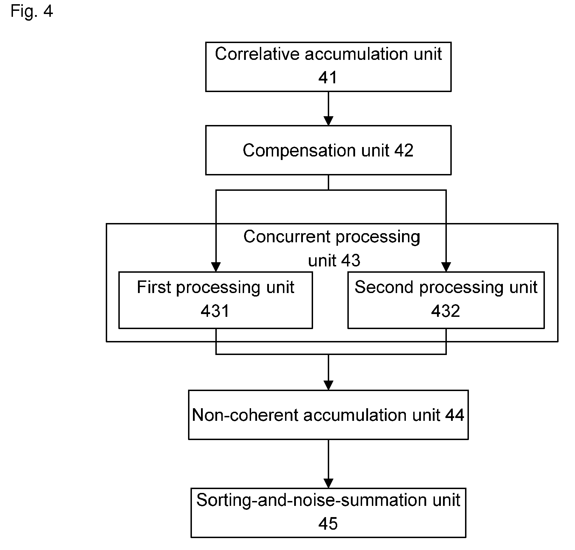

In order to implement the above method, the disclosure also provides a system for detecting a preamble, which is applied to a WCDMA system. Fig. 4 shows a structural diagram of the system for detecting a preamble according to the disclosure. As shown in Fig. 4, the system includes: a correlative accumulation unit 41, a compensation unit 42 and a concurrent processing unit 43.

The correlative accumulation unit 41 is configured to divide chips of the preamble into a plurality of chip blocks and perform correlative accumulation on the chip blocks to obtain multiple groups of partial products of signature components.

The compensation unit 42 is configured to: perform compensation of positive frequency offset on each group of the multiple groups of partial products of signature components to obtain multiple groups of compensation results of positive frequency offset, and perform compensation of negative frequency offset on each group of the multiple groups of partial products of signature components to obtain multiple groups of compensation results of negative frequency offset.

The concurrent processing unit 43 is configured to perform coherent accumulation, phase rotation, signature matching and complex modulus calculation, and dual-antenna merging on the multiple groups of compensation results of positive frequency offset and, perform the coherent accumulation, the phase rotation, the signature matching and the complex modulus calculation, and the dual-antenna merging on the multiple groups of compensation results of negative frequency offset.

The concurrent processing unit 43 further includes:

a first processing unit 431 configured to perform the coherent accumulation, the phase rotation, the signature matching and the complex modulus calculation, and the dual-antenna merging on the multiple groups of compensation results of positive frequency offset; and

a second processing unit 432 configured to perform the coherent accumulation, the phase rotation, the signature matching and the complex modulus calculation, and the dual-antenna merging on the multiple groups of compensation results of negative frequency offset.

The system further includes:

a non-coherent accumulation unit 44 configured to, when the coherent accumulation length $N_c$ is equal to 2048, perform non-coherent accumulation on two groups of multiple partial products of signatures, wherein the two groups of multiple partial products of signatures are obtained by completing the dual-antenna merging for same frequency offset; and

a sorting-and-noise-accumulation unit 45 configured to calculate maximum ADP and noise data and to report the maximum ADP and noise data to a relevant subsystem.

The step that compensation of positive frequency offset is performed on each group of the multiple groups of partial products of signature components and compensation of negative frequency offset is performed on each group of the multiple groups of partial products of signature components includes: each group of partial products of signature components of 16 groups of partial products of signature components obtained after the correlative accumulation are multiplied by frequency offset compensation values $e^{-j2\pi f_e t_k}$ and $e^{-j2\pi f(-f_e)t_k}$ respectively.

The step that coherent accumulation, phase rotation, signature matching and complex modulus calculation, and dual-antenna merging are performed on the multiple groups of compensation results of positive frequency offset and the coherent accumulation, the phase rotation, the signature matching and the complex modulus calculation, the and dual-antenna merging are performed on the multiple groups of compensation results of negative frequency offset includes:

the coherent accumulation is performed on 16 groups of compensation results of positive frequency offset and the coherent accumulation is performed on 16 groups of compensation results of negative frequency offset; the phase rotation is performed respectively on the results obtained after the coherent accumulation, using a phase rotation factor $e^{-j(\frac{\pi}{4}+\frac{\pi}{2}j)}$, the signature matching and the complex modulus calculation are performed respectively on the result obtained after the phase rotation; and the dual-antenna merging is performed respectively on the results obtained after the signature matching and the complex modulus calculation.

The above are only preferable embodiments of the disclosure, and are not intended to limit the scope of protection of the disclosure. The scope of protection is determined by the claims.

## Claims

1. A method for detecting a preamble, comprising:

dividing chips of the preamble into a plurality of chip blocks, and performing correlative accumulation on the plurality of chip blocks to obtain multiple groups of partial products of signature components (step 202); performing compensation of positive frequency offset on each group of the multiple groups of partial products of signature components to obtain multiple groups of compensation results of positive frequency offset (step 203), and performing compensation of negative frequency offset on each group of the multiple groups of partial products of signature components to obtain multiple groups of compensation results of negative frequency offset (step 203); and performing coherent accumulation (step 204), phase rotation (step 205), signature matching and complex modulus calculation (step 206), and dual-antenna merging (step 207) on the multiple groups of compensation results of positive frequency offset, and performing the coherent accumulation (step 204), the phase rotation (step 205), the signature matching and the complex modulus calculation (step 206), and the dual-antenna merging (step 207)on the multiple groups of compensation results of negative frequency offset.

2. The method according to claim 1, wherein the step of performing compensation of positive frequency offset on each group of the multiple groups of partial products of signature components and performing compensation of negative frequency offset on each group of the multiple groups of partial products of signature components comprises:

multiplying each group of partial products of signature components of 16 groups of partial products of signature components obtained after the correlative accumulation by frequency offset compensation *values* $e^{-j2\pi f_e t_k}$ and $e^{-j2\pi(-f_e)t_k}$ respectively.

3. The method according to claim 1, wherein the step of performing coherent accumulation, phase rotation, signature matching and complex modulus calculation, and dual-antenna merging on the multiple groups of compensation results of positive frequency offset and performing the coherent accumulation, the phase rotation, the signature matching and the complex modulus calculation, and the dual-antenna merging on the multiple groups of compensation results of negative frequency offset comprises:

performing the coherent accumulation on 16 groups of compensation results of positive frequency offset and performing the coherent accumulation on 16 groups of compensation results of negative frequency offset;
performing the phase rotation respectively on the results obtained after the coherent accumulation, using a phase rotation factor $e^{-j(\frac{\pi}{4}+\frac{\pi}{2}j)}$;

performing the signature matching and the complex modulus calculation respectively on the results obtained after the phase rotation; and
performing the dual-antenna merging respectively on the results obtained after the signature matching and the complex modulus calculation.

4. The method according to claim 3, wherein the step of performing the coherent accumulation on the multiple groups of compensation results of positive frequency offset and performing the coherent accumulation on the multiple groups of compensation results of negative frequency offset comprises:

performing the coherent accumulation of partial products of same signature components on the 16 groups of compensation results of positive frequency offset and performing the coherent accumulation of partial products of same signature components on the 16 groups of compensation results of negative frequency offset; if a coherent accumulation length $N_c$ is equal to 4096, performing the coherent accumulation on 16 partial products of signature components j belonging to same frequency offset, to output a group of 16 partial products of signature components for positive frequency offset and output a group of 16 partial products of signature components for negative frequency offset; if the coherent accumulation length $N_c$ is equal to 2048, performing the coherent accumulation on first 8 partial products of the signature components j belonging to the same frequency offset and performing the coherent accumulation on last 8 partial products of the signature components j belonging to the same frequency offset, to output two groups of 16 partial products of signature components for positive frequency offset and output two groups of 16 partial products of signature components for negative frequency offset.

5. The method according to claim 3, wherein the step of performing the phase rotation respectively on the results obtained after the coherent accumulation comprises:

rotating partial products of signature components corresponding to j by
$-(\frac{\pi}{4}+\frac{\pi}{2}j)$ degrees according to a value of a sequence number j of 16 signature components; if a coherent accumulation length $N_c$ is equal to 4096, outputting a group of 16 partial products of signature components for positive frequency offset and outputting a group of 16 partial products of signature components for negative frequency offset; if the coherent accumulation length $N_c$ is equal to 2048, outputting two groups of 16 partial products of signature components for positive frequency offset and outputting two groups of 16 partial products of signature components for negative frequency offset.

6. The method according to claim 3, wherein the step of performing the signature matching and the complex modulus calculation respectively on the results obtained after the phase rotation comprises:

multiplying the phase rotation result of positive frequency offset and the phase rotation result of negative frequency offset respectively by a Hadamard matrix:

$$\begin{bmatrix} hat(15) & hat(14) & . & . & hat(0) \end{bmatrix} = \begin{bmatrix} rot(15) & rot(14) & . & . & rot(0) \end{bmatrix} \begin{bmatrix} s_{15}^{15} & s_{14}^{15} & . & . & s_0^{15} \\ s_{15}^{14} & . & . & . & . \\ . & . & . & . & . \\ . & . & . & . & . \\ s_{15}^0 & s_{14}^0 & . & . & s_0^0 \end{bmatrix}$$

where, rot(15), rot(14), ......, rot(0) represent 16 partial products of signature components output after the phase rotation; hat(15), hat(14), ......, hat(0) represent the results obtained after the signature matching; and $s_n^j$ represents a j-th component of signature n, where n=0, 1, ..., 15,and j=0, 1, ..., 15; and

performing the complex modulus calculation on the result obtained after the signature matching; if a coherent accumulation length $N_c$ is equal to 4096, outputting a group of 16 partial products of signatures for positive frequency offset and outputting a group of 16 partial products of signatures for negative frequency offset; if the coherent accumulation length $N_c$ is equal to 2048, outputting two groups of 16 partial products of signatures for positive frequency offset and outputting two groups of 16 partial products of signatures for negative frequency offset.

7. The method according to claim 3, wherein the performing the dual-antenna merging respectively on the results obtained after the signature matching and the complex modulus calculation comprises:

after the signature matching and the complex modulus calculation are completed, calculating an average of results of two antennas subjected to the signature matching and the complex modulus calculation in each partial product of signature components; if a coherent accumulation length $N_c$ is equal to 4096, outputting a group of 16 partial products of signatures for positive frequency offset and outputting a group of 16 partial products of signatures for negative frequency offset; if the coherent accumulation length $N_c$ is equal to 2048, outputting two groups of 16 partial products of signatures for positive frequency offset and outputting two groups of 16 partial products of signatures for negative frequency offset.

8. The method according to claim 1, further comprising: when the coherent accumulation length $N_c$ is equal to 2048, performing non-coherent accumulation on two groups of multiple partial products of signatures, wherein the two groups of multiple partial products of signatures are obtained by completing the dual-antenna merging for same frequency offset (step 208).

9. The method according to claim 8, wherein the step of performing non-coherent accumulation on two groups of multiple partial products of signatures comprises:

for each of positive frequency offset and negative frequency offset, there are two groups of 16 partial products of signatures after the signature matching is completed; performing the non-coherent accumulation on the two groups of 16 partial products of signatures obtained after the dual-antenna merging is completed for same frequency offset, to output a group of 16 Amplitude Delay Profiles (ADPs) for positive frequency offset and output a group of 16 ADPs for negative frequency offset.

10. The method according to claim 8 or 9, further comprising:

calculating maximum ADP and noise data, and reporting the maximum ADP and the noise data to a relevant subsystem (step 209).

11. The method according to claim 10, wherein the calculating maximum ADP and noise data and reporting the maximum ADP and the noise data to a relevant subsystem comprises:

sorting ADPs corresponding to same signatures and same frequency offset which are obtained by performing preamble detection on all search positions of a same preamble detection task, to obtain 16 maximum ADPs; obtaining 512 maximum ADPs according to 256 maximum ADPs corresponding to positive frequency offset and 256 maximum ADPs corresponding to negative frequency offset; performing cumulative accumulation on remaining ADPs obtained after the 256 maximum ADPs corresponding to positive frequency offset are removed from all ADPs corresponding to positive frequency offset, to obtain noise data of positive frequency offset, and performing cumulative accumulation on remaining ADPs obtained after the 256 maximum ADPs corresponding to negative frequency offset are removed from all ADPs corresponding to negative frequency offset, to obtain noise data of negative frequency offset; and packaging the 512 maximum ADPs and the two noise data and reporting the packaged 512 maximum ADPs and two noise data to the relevant subsystem.

12. A system for detecting a preamble, comprising: a correlative accumulation unit, a compensation unit and a concurrent processing unit, wherein
the correlative accumulation unit (41) is configured to divide chips of the preamble into a plurality of chip blocks and perform correlative accumulation on the chip blocks to obtain multiple groups of partial products of signature components;

the compensation unit (42) is configured to: perform compensation of positive frequency offset on each group of the multiple groups of partial products of signature components, to obtain multiple groups of compensation results of positive frequency offset; and perform compensation of negative frequency offset on each group of the multiple groups of partial products of signature components, to obtain multiple groups of compensation results of negative frequency offset; and

the concurrent processing unit (43) is configured to perform coherent accumulation, phase rotation, signature matching and complex modulus calculation, and dual-antenna merging on the multiple groups of compensation results of positive frequency offset, and perform the coherent accumulation, the phase rotation, the signature matching and complex modulus calculation, and the dual-antenna merging on the multiple groups of compensation results of negative frequency offset.

13. The system according to claim 12, wherein the concurrent processing unit further comprises:

a first processing unit (431) configured to perform the coherent accumulation, the phase rotation, the signature matching and the complex modulus calculation, and the dual-antenna merging on the multiple groups of compensation results of positive frequency offset; and

a second processing unit (432) configured to perform the coherent accumulation, the phase rotation, the signature matching and the complex modulus calculation, and the dual-antenna merging on the multiple groups of compensation results of negative frequency offset.

14. The system according to claim 12 or 13, further comprising:

a non-coherent accumulation unit (44) configured to, when the coherent accumulation length $N_c$ is equal to 2048, perform non-coherent accumulation on two groups of multiple partial products of signatures, wherein the two groups of multiple partial products of signatures are obtained by completing the dual-antenna merging for same frequency offset; and

a sorting-and-noise-accumulation unit (45) configured to calculate maximum ADP and noise data and to report the maximum ADP and noise data to a relevant subsystem.

**Patentansprüche**

1. Verfahren zur Erkennung einer Präambel, umfassend:

Dividieren von Chips der Präambel in eine Vielzahl von Chipsblöcken und Durchführen einer korrelativen Akkumulation auf der Vielzahl von Chipsblöcken, um zahlreiche Gruppen von Teilprodukten von Signaturkomponenten (Schritt 202) zu erhalten;

Durchführen einer Kompensation des positiven Frequenzversatzes auf jeder Gruppe der zahlreichen Gruppen von Teilprodukten von Signaturkomponenten, um zahlreiche Gruppen von Kompensationsergebnissen des positiven Frequenzversatzes (Schritt 203) zu erhalten, und Durchführen einer Kompensation des negativen Frequenzversatzes auf jeder Gruppe der zahlreichen Gruppen von Teilprodukten von Signaturkomponenten, um zahlreiche Gruppen von Kompensationsergebnissen des negativen Frequenzversatzes (Schritt 203) zu erhalten; und

Durchführen einer kohärenten Akkumulation (Schritt 204), Phasendrehung (Schritt 205), Signaturanpassung und komplexen Modulberechnung (Schritt 206) und Doppelantennen-Verschmelzung (Schritt 207) auf den zahlreichen Gruppen von Kompensationsergebnissen des positiven Frequenzversatzes und Durchführen der kohärenten Akkumulation (Schritt 204), Phasendrehung (Schritt 205), Signaturanpassung und komplexen Modulberechnung (Schritt 206) und der Doppelantennen-Verschmelzung (Schritt 207) auf den zahlreichen Gruppen von Kompensationsergebnissen des negativen Frequenzversatzes.

2. Verfahren nach Anspruch 1, wobei der Schritt des Durchführens einer Kompensation des positiven Frequenzversatzes auf jeder Gruppe der zahlreichen Gruppen von Teilprodukten von Signaturkomponenten und des Durchführens einer Kompensation des negativen Frequenzversatzes auf jeder Gruppe der zahlreichen Gruppen von Teilprodukten von Signaturkomponenten Folgendes umfasst:

Multiplizieren jeder Gruppe von Teilprodukten von Signaturkomponenten von 16 Gruppen von Teilprodukten von Signaturkomponenten, die nach der korrelativen Akkumulation durch Frequenzversatz-Kompensationswerte $e^{-j2\pi f_e t_k}$ bzw. $e^{-j2\pi(-f_e)t_k}$ erhalten werden.

3. Verfahren nach Anspruch 1, wobei der Schritt des Durchführens einer kohärenten Akkumulation, Phasendrehung, Signaturanpassung und komplexen Modulberechnung und Doppelantennen-Verschmelzung auf den zahlreichen Gruppen von Kompensationsergebnissen des positiven Frequenzversatzes und des Durchführens der kohärenten Akkumulation, Phasendrehung, Signaturanpassung und komplexen Modulberechnung und Doppelantennen-Verschmelzung auf den zahlreichen Gruppen von Kompensationsergebnissen des negativen Frequenzversatzes Folgendes umfasst:

Durchführen der kohärenten Akkumulation von 16 Gruppen von Kompensationsergebnissen des positiven Frequenzversatzes und Durchführen der kohärenten Akkumulation von 16 Gruppen von Kompensationsergebnissen des negativen Frequenzversatzes;
Durchführen der Phasendrehung jeweils auf den Ergebnissen, die nach der kohärenten Akkumulation erhalten wurden, unter Verwendung eines Phasendrehfaktors $e^{-j(\frac{\pi}{4}+\frac{\pi}{2}j)}$;

Durchführen der Signaturanpassung und der komplexen Modulberechnung jeweils auf den Ergebnissen, die nach der Phasendrehung erhalten werden; und
Durchführen der Doppelantennen-Verschmelzung jeweils auf den Ergebnissen, die nach der Signaturanpassung und der komplexen Modulberechnung erhalten werden.

4. Verfahren nach Anspruch 3, wobei der Schritt des Durchführens der kohärenten Akkumulation auf den zahlreichen Gruppen von Kompensationsergebnissen des positiven Frequenzversatzes und des Durchführens der kohärenten Akkumulation auf den zahlreichen Gruppen von Kompensationsergebnissen des negativen Frequenzversatzes Folgendes umfasst:

Durchführen der kohärenten Akkumulation von Teilprodukten von gleichen Signaturkomponenten auf den 16 Gruppen von Kompensationsergebnissen des positiven Frequenzversatzes und Durchführen der kohärenten Akkumulation von Teilprodukten der gleichen Signaturkomponenten auf den 16 Gruppen von Kompensationsergebnissen des negativen Frequenzversatzes; wenn eine kohärente Akkumulationslänge $N_c$ gleich 4096 ist, Durchführen der kohärenten Akkumulation auf 16 Teilprodukten von Signaturkomponenten j, die zum gleichen Frequenzversatz gehören, um eine Gruppe von 16 Teilprodukten von Signaturkomponenten für einen positiven Frequenzversatz auszugeben und eine Gruppe von 16 Teilprodukten von Signaturkomponenten für einen negativen Frequenzversatz auszugeben; wenn die kohärente Akkumulationslänge $N_c$ gleich 2048 ist, Durchführen der kohärenten Akkumulation auf ersten 8 Teilprodukten der Signaturkomponenten j, die zum gleichen Frequenzversatz gehören, und Durchführen der kohärenten Akkumulation auf letzten 8 Teilprodukten der Signaturkomponenten j, die zum gleichen Frequenzversatz gehören, um zwei Gruppen von 16 Teilprodukten von Signaturkomponenten für einen positiven Frequenzversatz auszugeben und zwei Gruppen von 16 Teilprodukten von Signaturkomponenten für einen negativen Frequenzversatz auszugeben.

5. Verfahren nach Anspruch 3, wobei der Schritt des Durchführens der Phasendrehung jeweils auf den Ergebnissen, die nach der kohärenten Akkumulation erhalten werden, Folgendes umfasst:

Drehen von Teilprodukten von Signaturkomponenten, die j entsprechen, durch $-(\frac{\pi}{4}+\frac{\pi}{2}j)$ Grad je nach einem Wert einer Sequenznummer j von 16 Signaturkomponenten; wenn eine kohärente Akkumulationslänge $N_c$ gleich 4096 ist, Ausgeben einer Gruppe von 16 Teilprodukten von Signaturkomponenten für einen positiven Frequenzversatz und Ausgeben einer Gruppe von 16 Teilprodukten von Signaturkomponenten für einen negativen Frequenzversatz; wenn die kohärente Akkumulationslänge $N_c$ gleich 2048 ist, Ausgeben von zwei Gruppen von 16 Teilprodukten von Signaturkomponenten für einen positiven Frequenzversatz und Ausgeben von zwei Gruppen von 16 Teilprodukten von Signaturkomponenten für einen negativen Frequenzversatz.

6. Verfahren nach Anspruch 3, wobei der Schritt des Durchführens der Signaturanpassung und der komplexen Modulberechnung jeweils auf den Ergebnissen, die nach der Phasendrehung erhalten werden, Folgendes umfasst:

Multiplizieren des Phasendreh-Ergebnisses des positiven Frequenzversatzes und des Phasendreh-Ergebnisses des negativen Frequenzversatzes jeweils durch eine Hadamard-Matrix:

$$[hat(15) \quad hat(14) \quad . \quad . \quad hat(0)] = [rot(15) \quad rot(14) \quad . \quad . \quad rot(0)] \begin{bmatrix} s_{15}^{15} & s_{14}^{15} & . & . & s_0^{15} \\ s_{15}^{14} & . & . & . & . \\ . & . & . & . & . \\ . & . & . & . & . \\ s_{15}^0 & s_{14}^0 & . & . & s_0^0 \end{bmatrix}$$

wobei rot(15), rot(14), rot(0) 16 Teilprodukte von Signaturkomponenten darstellen, die nach der Phasendrehung ausgegeben werden; hat(15), hat(14), hat(0) die Ergebnisse darstellen, die nach der Signaturanpassung erhalten werden; und $s_n^j$ die j-te Komponente der Signatur n darstellt, wobei n = 0, 1, ..., 15 und j = 0, 1, ..., 15 ist; und Durchführen der komplexen Modulberechnung auf dem Ergebnis, das nach der Signaturanpassung erhalten wird; wenn eine kohärente Akkumulationslänge $N_c$ gleich 4096 ist, Ausgeben einer Gruppe von 16 Teilprodukten von Signaturkomponenten für einen positiven Frequenzversatz und Ausgeben einer Gruppe von 16 Teilprodukten von Signaturen für einen negativen Frequenzversatz; wenn die kohärente Akkumulationslänge $N_c$ gleich 2048 ist, Ausgeben von zwei Gruppen von 16 Teilprodukten von Signaturen für einen positiven Frequenzversatz und Ausgeben von zwei Gruppen von 16 Teilprodukten von Signaturen für einen negativen Frequenzversatz.

7. Verfahren nach Anspruch 3, wobei das Durchführen der Doppelantennen-Verschmelzung jeweils auf den Ergebnissen, die nach der Signaturanpassung und der komplexen Modulberechnung erhalten werden, Folgendes umfasst:

nachdem die Signaturanpassung und die komplexe Modulberechnung abgeschlossen sind, Berechnen eines Durchschnitts von Ergebnissen von zwei Antennen, die der Signaturanpassung und der komplexen Modulberechnung in jedem Teilprodukt von Signaturkomponenten unterzogen wurden; wenn eine kohärente Akkumulationslänge $N_c$ gleich 4096 ist, Ausgeben einer Gruppe von 16 Teilprodukten von Signaturen für einen positiven Frequenzversatz und Ausgeben einer Gruppe von 16 Teilprodukten von Signaturen für einen negativen Frequenzversatz; wenn die kohärente Akkumulationslänge $N_c$ gleich 2048 ist, Ausgeben von zwei Gruppen von 16 Teilprodukten von Signaturen für einen positiven Frequenzversatz und Ausgeben von zwei Gruppen von 16 Teilprodukten von Signaturen für einen negativen Frequenzversatz.

8. Verfahren nach Anspruch 1, weiter umfassend: wenn die kohärente Akkumulationslänge $N_c$ gleich 2048 ist, Durchführen einer nicht-kohärenten Akkumulation auf zwei Gruppen von zahlreichen Teilprodukten von Signaturen, wobei die zwei Gruppen von zahlreichen Teilprodukten von Signaturen durch das Abschließen der Doppelantennen-Verschmelzung für den gleichen Frequenzversatz (Schritt 208) erhalten werden.

9. Verfahren nach Anspruch 8, wobei der Schritt des Durchführens einer nicht-kohärenten Akkumulation auf zwei Gruppen von zahlreichen Teilprodukten von Signaturen Folgendes umfasst:

für jeden des positiven Frequenzversatzes und des negativen Frequenzversatzes gibt es zwei Gruppen von 16 Teilprodukten von Signaturen, nachdem die Signaturanpassung abgeschlossen ist; Durchführen einer nicht-kohärenten Akkumulation auf den zwei Gruppen von 16 Teilprodukten von Signaturen, die erhalten wurden, nachdem die Doppelantennen-Verschmelzung den gleichen Frequenzversatz abgeschlossen ist, um eine Gruppe von 16 Amplitude Delay Profilen (ADPs) für einen positiven Frequenzversatz auszugeben und eine Gruppe von 16 ADPs für einen negativen Frequenzversatz auszugeben.

10. Verfahren nach Anspruch 8 oder 9, weiter umfassend:

Berechnen von maximalen ADP- und Rauschdaten und Berichten der maximalen ADP und der Rauschdaten an ein relevantes Subsystem (Schritt 209).

11. Verfahren nach Anspruch 10, wobei das Berechnen der maximalen ADP- und Rauschdaten und das Berichten der maximalen ADP- und die Rauschdaten an ein relevantes Untersystem Folgendes umfasst:

Sortieren der ADPs, die zu den gleichen Signaturen und dem gleichen Frequenzversatz gehören, die durch das Durchführen einer Präambelerkennung auf allen Suchpositionen einer gleichen Präambelerkennungs-Aufgabe erhalten wurden; um 16 maximale ADPs zu erhalten; Erhalten von 512 maximalen ADPs gemäß 256 maximalen ADPs, die einem positiven Frequenzversatz entsprechen, und 256 maximalen ADPs, die einem negativen Frequenzversatz entsprechen; Durchführen einer kumulativen Akkumulation auf verbleibenden ADPs, die erhalten wurden, nachdem die 256 maximalen ADPs, die dem positiven Frequenzversatz entsprechen, von allen ADPs entfernt wurden, die einem positiven Frequenzversatz entsprechen, um Rauschdaten von einem positiven Frequenzversatz zu erhalten, und Durchführen der kumulativen Akkumulation auf verbleibenden ADPs, die erhalten wurden, nachdem die 256 maximalen ADPs, die dem negativen Frequenzversatz entsprechen, von allen ADPs entfernt wurden, die einem negativen Frequenzversatz entsprechen, um Rauschdaten von einem negativen Frequenzversatz zu erhalten; und Verpacken der 512 maximalen ADPs und der zwei Rauschdaten und Berichten der verpackten 512 maximalen ADPs und zwei Rauschdaten an das relevante Subsystem.

**12.** System zur Erkennung einer Präambel, umfassend: eine korrelative Akkumulationseinheit, eine Kompensationseinheit und eine gleichzeitige Verarbeitungseinheit, wobei
die korrelative Akkumulationseinheit (41) konfiguriert ist, um Chips der Präambel in eine Vielzahl von Chipsblöcken zu dividieren und eine korrelative Akkumulation auf den Chipsblöcken durchzuführen, um zahlreiche Gruppen von Teilprodukten von Signaturkomponenten zu erhalten;
wobei die Kompensationseinheit (42) konfiguriert ist, um: eine Kompensation des positiven Frequenzversatzes auf jeder Gruppe der zahlreichen Gruppen von Teilprodukten von Signaturkomponenten durchzuführen, um zahlreiche Gruppen von Kompensationsergebnissen eines positiven Frequenzversatzes zu erhalten; und eine Kompensation des negativen Frequenzversatzes auf jeder Gruppe der zahlreichen Gruppen von Teilprodukten von Signaturkomponenten durchzuführen, um zahlreiche Gruppen von Kompensationsergebnissen des negativen Frequenzversatzes zu erhalten; und
wobei die gleichzeitige Verarbeitungseinheit (43) konfiguriert ist, um eine kohärente Akkumulation, Phasendrehung, Signaturanpassung und komplexe Modulberechnung und Doppelantennen-Verschmelzung auf den zahlreichen Gruppen von Kompensationsergebnissen des positiven Frequenzversatzes durchzuführen und die kohärente Akkumulation, Phasendrehung, Signaturanpassung und komplexe Modulberechnung und die Doppelantennen-Verschmelzung auf den zahlreichen Gruppen von Kompensationsergebnissen des negativen Frequenzversatzes durchzuführen.

**13.** System nach Anspruch 12, wobei die gleichzeitige Verarbeitungseinheit weiter Folgendes umfasst:

eine erste Verarbeitungseinheit (431), die konfiguriert ist, um die kohärente Akkumulation, Phasendrehung, Signaturanpassung und komplexe Modulberechnung und die Doppelantennen-Verschmelzung auf den zahlreichen Gruppen von Kompensationsergebnissen des positiven Frequenzversatzes durchzuführen; und
eine zweite Verarbeitungseinheit (432), die konfiguriert ist, um die kohärente Akkumulation, Phasendrehung, Signaturanpassung und komplexe Modulberechnung und die Doppelantennen-Verschmelzung auf den zahlreichen Gruppen von Kompensatrionergebnissen des negativen Frequenzversatzes durchzuführen.

**14.** System nach Anspruch 12 oder 13, weiter umfassend:

eine nicht kohärente Akkumulationseinheit (44), die konfiguriert ist, um, wenn die kohärente Akkumulationslänge $N_c$ gleich 2048 ist, eine nicht-kohärente Akkumulation auf zwei Gruppen von zahlreichen Teilprodukten von Signaturen durchzuführen, wobei die zwei Gruppen der zahlreichen Teilprodukte von Signaturen durch das Abschließen der Doppelantennen-Verschmelzung für den gleichen Frequenzversatz erhalten werden; und
eine Sortier-und-Rausch-Akkumulationseinheit (45), die konfiguriert ist, um maximale ADP- und Rauschdaten zu berechnen und die maximalen ADP- und Rauschdaten an ein relevantes Subsystem zu berichten.

## Revendications

**1.** Procédé pour détecter un préambule, comprenant :

la division des éléments du préambule en une pluralité de blocs d'éléments, et l'exécution d'une accumulation corrélative sur la pluralité de blocs d'éléments pour obtenir de multiples groupes de produits partiels de composantes de signature (étape 202) ;
l'exécution d'une compensation de décalage de fréquence positif sur chaque groupe des multiples groupes de produits partiels de composantes de signature pour obtenir de multiples groupes de résultats de compensation de décalage de fréquence positif (étape 203), et l'exécution d'une compensation de décalage de fréquence négatif sur chaque groupe des multiples groupes de produits partiels de composantes de signature pour obtenir de multiples groupes de résultats de compensation de décalage de fréquence négatif (étape 203) ; et l'exécution d'une accumulation cohérente (étape 204), d'une rotation de phase (étape 205), d'une mise en correspondance de signatures et d'un calcul de module complexe (étape 206), et d'une fusion d'antenne double (étape 207) sur les multiples groupes de résultats de compensation de décalage de fréquence positif, et l'exécution de l'accumulation cohérente (étape 204), de la rotation de phase (étape 205), de la mise en correspondance de signatures et du calcul de module complexe (étape 206), et de la fusion d'antenne double (étape 207) sur les multiples groupes de résultats de compensation de décalage de fréquence négatif.

2. Procédé selon la revendication 1, dans lequel l'étape d'exécution d'une compensation de décalage de fréquence positif sur chaque groupe des multiples groupes de produits partiels de composantes de signature et d'exécution d'une compensation de décalage de fréquence négatif sur chaque groupe des multiples groupes de produits partiels de composantes de signature comprend :

la multiplication de chaque groupe de produits partiels de composantes de signature de 16 groupes de produits partiels de composantes de signature obtenus après l'accumulation corrélative par des valeurs de compensation de décalage de fréquence $e^{-j2\pi f_e t_k}$ et $e^{-j2\pi(-f_e)t_k}$ respectivement.

3. Procédé selon la revendication 1, dans lequel l'étape d'exécution d'une accumulation cohérente, d'une rotation de phase, d'une mise en correspondance de signatures et d'un calcul de module complexe, et de fusion d'antenne double sur les multiples groupes de résultats de compensation de décalage de fréquence positif et d'exécution de l'accumulation cohérente, de la rotation de phase, de la mise en correspondance de signatures et du calcul de module complexe, et de la fusion d'antenne double sur les multiples groupes de résultats de compensation de décalage de fréquence négatif comprend :

l'exécution de l'accumulation cohérente sur 16 groupes de résultats de compensation de décalage de fréquence positif et l'exécution de l'accumulation cohérente sur 16 groupes de résultats de compensation de décalage de fréquence négatif ;
l'exécution de la rotation de phase respectivement sur les résultats obtenus après l'accumulation cohérente, en utilisant un facteur de rotation de phase $e^{-j(\frac{\pi}{4}+\frac{\pi}{2}j)}$ ;

l'exécution de la mise en correspondance de signatures et du calcul de module complexe respectivement sur les résultats obtenus après la rotation de phase ; et
l'exécution de la fusion d'antenne double respectivement sur les résultats obtenus après la mise en correspondance de signatures et le calcul de module complexe.

4. Procédé selon la revendication 3, dans lequel l'étape d'exécution de l'accumulation cohérente sur les multiples groupes de résultats de compensation de décalage de fréquence positif et d'exécution de l'accumulation cohérente sur les multiples groupes de résultats de compensation de décalage de fréquence négatif comprend :

l'exécution de l'accumulation cohérente de produits partiels de mêmes composantes de signature sur les 16 groupes de résultats de compensation de décalage de fréquence positif et l'exécution de l'accumulation cohérente de produits partiels de mêmes composantes de signature sur les 16 groupes de résultats de compensation de décalage de fréquence négatif ; si une longueur d'accumulation cohérente $N_c$ est égale à 4096, l'exécution de l'accumulation cohérente sur 16 produits partiels de composantes de signature j appartenant à un même décalage de fréquence, pour sortir un groupe de 16 produits partiels de composantes de signature pour un décalage de fréquence positif et pour sortir un groupe de 16 produits partiels de composantes de signature pour un décalage de fréquence négatif ; si la longueur d'accumulation cohérente $N_c$ est égale à 2048, l'exécution de l'accumulation cohérente sur les 8 premiers produits partiels des composantes de signature j appartenant au même décalage de fréquence et l'exécution de l'accumulation cohérente sur les 8 derniers produits partiels des composantes de signature j appartenant au même décalage de fréquence, pour sortir deux groupes de 16 produits partiels de composantes de signature pour un décalage de fréquence positif et pour sortir deux groupes de 16 produits partiels de composantes de signature pour un décalage de fréquence négatif.

5. Procédé selon la revendication 3, dans lequel l'étape d'exécution de la rotation de phase respectivement sur les résultats obtenus après l'accumulation cohérente comprend :

la rotation de produits partiels de composantes de signature correspondant à j de $-(\frac{\pi}{4}+\frac{\pi}{2}j)$ degrés conformément à une valeur d'un numéro d'ordre j de 16 composantes de signature ; si une longueur d'accumulation cohérente $N_c$ est égale à 4096, la sortie d'un groupe de 16 produits partiels de composantes de signature pour un décalage de fréquence positif et la sortie d'un groupe de 16 produits partiels de composantes de signature pour un décalage de fréquence négatif ; si la longueur d'accumulation cohérente $N_c$ est égale à 2048, la sortie de deux groupes de 16 produits partiels de composantes de signature pour un décalage de fréquence positif et la sortie de deux groupes de 16 produits partiels de composantes de signature pour un décalage de fréquence négatif.

6. Procédé selon la revendication 3, dans lequel l'étape d'exécution de la mise en correspondance de signatures et du calcul de module complexe respectivement sur les résultats obtenus après la rotation de phase comprend :

la multiplication du résultat de la rotation de phase du décalage de fréquence positif et du résultat de la rotation de phase du décalage de fréquence négatif respectivement par une matrice de Hadamard

$$[hat(15) \quad hat(14) \quad . \quad . \quad hat(0)] = [rot(15) \quad rot(14) \quad . \quad . \quad rot(0)] \begin{bmatrix} s_{15}^{15} & s_{14}^{15} & . & . & s_0^{15} \\ s_{15}^{14} & . & . & . & . \\ . & . & . & . & . \\ . & . & . & . & . \\ s_{15}^0 & s_{14}^0 & . & . & s_0^0 \end{bmatrix}$$

où, rot(15), rot(14), ..., rot(0) représentent 16 produits partiels de composantes de signature sortis après la rotation de phase ; hat(15), hat(14), ..., hat(0) représentent les résultats obtenus après la mise en correspondance de signatures ; et $s_n^j$ représente une jème composante de signature n, où n = 0, 1, ..., 15, et j = 0, 1, ..., 15 ; et

l'exécution du calcul de module complexe sur le résultat obtenu après la mise en correspondance de signatures ; si une longueur d'accumulation cohérente $N_c$ est égale à 4096, la sortie d'un groupe de 16 produits partiels de signatures pour un décalage de fréquence positif et la sortie d'un groupe de 16 produits partiels de signatures pour un décalage de fréquence négatif ; si la longueur d'accumulation cohérente $N_c$ est égale à 2048, la sortie de deux groupes de 16 produits partiels de signatures pour un décalage de fréquence positif et la sortie de deux groupes de 16 produits partiels de signatures pour un décalage de fréquence négatif.

7. Procédé selon la revendication 3, dans lequel l'exécution de la fusion d'antenne double respectivement sur les résultats obtenus après la mise correspondance de signature et le calcul de module complexe comprend :

après que la mise correspondance de signature et le calcul de module complexe ont été achevés, le calcul d'une moyenne des résultats de deux antennes soumises à la mise en correspondance de signatures et au calcul de module complexe dans chaque produit partiel de composantes de signature ; si une longueur d'accumulation cohérente $N_c$ est égale à 4096, la sortie d'un groupe de 16 produits partiels de signatures pour un décalage de fréquence positif et la sortie d'un groupe de 16 produits partiels de signatures pour un décalage de fréquence négatif ; si la longueur d'accumulation cohérente $N_c$ est égale à 2048, la sortie de deux groupes de 16 produits partiels de signatures pour un décalage de fréquence positif et la sortie de deux groupes de 16 produits partiels de signatures pour un décalage de fréquence négatif.

8. Procédé selon la revendication 1, comprenant en outre : lorsque la longueur d'accumulation cohérente $N_c$ est égale à 2048,
l'exécution d'une accumulation non cohérente sur deux groupes de multiples produits partiels de signatures, dans lequel les deux groupes de multiples produits partiels de signatures sont obtenus en achevant la fusion d'antenne double pour un même décalage de fréquence (étape 208).

9. Procédé selon la revendication 8, dans lequel l'étape d'exécution de l'accumulation non cohérente sur deux groupes de multiples produits partiels de signatures comprend:

pour chacun du décalage de fréquence positif et du décalage de fréquence négatif, il existe deux groupes de 16 produits partiels de signatures après que la mise en correspondance de signatures a été achevée ; l'exécution de l'accumulation non cohérente sur les deux groupes de 16 produits partiels de signatures obtenus après que la fusion d'antenne double a été achevée pour un même décalage de fréquence, pour sortir un groupe de 16 profils de retard d'amplitude (ADP) pour un décalage de fréquence positif et pour sortir un groupe de 16 ADP pour un décalage de fréquence négatif.

10. Procédé selon la revendication 8 ou 9, comprenant en outre :

le calcul de l'ADP maximum et des données de bruit, et l'envoi de l'ADP maximum et des données de bruit à un sous-système pertinent (étape 209).

11. Procédé selon la revendication 10, dans lequel le calcul de l'ADP maximum et des données de bruit et l'envoi de l'ADP maximum et des données de bruit à un sous-système pertinent comprennent :

le tri des ADP correspondant aux mêmes signatures et au même décalage de fréquence qui sont obtenus en effectuant une détection de préambule à toutes les positions de recherche d'une même tâche de détection de préambule, pour obtenir 16 ADP maximums ; l'obtention de 512 ADP maximums conformément aux 256 ADP maximums correspondant à un décalage de fréquence positif et aux 256 ADP maximums correspondant à un décalage de fréquence négatif ; l'exécution d'une accumulation cumulative sur les ADP restants obtenus après que les 256 ADP maximums correspondant à un décalage de fréquence positif ont été retirés de tous les ADP correspondant à un décalage de fréquence positif, pour obtenir des données de bruit de décalage de fréquence positif, et l'exécution d'une accumulation cumulative sur les ADP restants obtenus après que les 256 ADP maximums correspondant à un décalage de fréquence négatif ont été retirés de tous les ADP correspondant à un décalage de fréquence négatif, pour obtenir des données de bruit de décalage de fréquence négatif; et le conditionnement des 512 ADP maximums et des deux données de bruit et l'envoi des 512 ADP maximums et des deux données de bruit conditionnés au sous-système pertinent.

12. Système pour détecter un préambule, comprenant : une unité d'accumulation corrélative, une unité de compensation et une unité de traitement simultané, dans lequel
l'unité d'accumulation corrélative (41) est configurée pour diviser les éléments du préambule en une pluralité de blocs d'éléments et effectuer une accumulation corrélative sur les blocs d'éléments pour obtenir de multiples groupes de produits partiels de composantes de signature ;
l'unité de compensation (42) est configurée pour : effectuer une compensation de décalage de fréquence positif sur chaque groupe des multiples groupes de produits partiels de composantes de signature, pour obtenir de multiples groupes de résultats de compensation de décalage de fréquence positif ; et exécuter une compensation de décalage de fréquence négatif sur chaque groupe des multiples groupes de produits partiels de composantes de signature, pour obtenir de multiples groupes de résultats de compensation de décalage de fréquence négatif ; et
l'unité de traitement simultané (43) est configurée pour effectuer une accumulation cohérente, une rotation de phase, une mise en correspondance de signatures et un calcul de module complexe, et une fusion d'antenne double sur les multiples groupes de résultats de compensation de décalage de fréquence positif, et effectuer l'accumulation cohérente, la rotation de phase, la mise en correspondance de signatures et le calcul de module complexe, et la fusion d'antenne double sur les multiples groupes de résultats de compensation de décalage de fréquence négatif.

13. Système selon la revendication 12, dans lequel l'unité de traitement simultané comprend en outre :

une première unité de traitement (431) configurée pour effectuer l'accumulation cohérente, la rotation de phase, la mise en correspondance de signatures et le calcul de module complexe, et la fusion d'antenne double sur les multiples groupes de résultats de compensation de décalage de fréquence positif ; et
une deuxième unité de traitement (432) configurée pour effectuer l'accumulation cohérente, la rotation de phase, la mise en correspondance de signatures et le calcul de module complexe, et la fusion d'antenne double sur les multiples groupes de résultats de compensation de décalage de fréquence négatif.

14. Système selon la revendication 12 ou 13, comprenant en outre :

une unité d'accumulation non cohérente (44) configurée pour, lorsque la longueur d'accumulation cohérente $N_c$ est égale à 2048, exécuter une accumulation non cohérente sur deux groupes de multiples produits partiels de signatures, dans lequel les deux groupes de multiples produits partiels de signatures sont obtenus en achevant la fusion d'antenne double pour un même décalage de fréquence ; et
une unité de tri et d'accumulation de bruit (45) configurée pour calculer un ADP maximum et des données de bruit et pour envoyer l'ADP maximum et les données de bruit à un sous-système pertinent.

Fig. 1

```
┌─────────────────────────┐
│ Correlative accumulation │
└─────────────────────────┘
             │
             ▼
┌─────────────────────────┐
│     Phase rotation       │
└─────────────────────────┘
             │
             ▼
┌─────────────────────────┐
│     Frequency offset     │
│      compensation        │
└─────────────────────────┘
             │
             ▼
┌─────────────────────────┐
│  Coherent accumulation   │
└─────────────────────────┘
             │
             ▼
┌─────────────────────────┐
│  Signature matching and  │
│ complex modulus calculation │
└─────────────────────────┘
             │
             ▼
┌─────────────────────────┐
│  Dual-antenna merging    │
└─────────────────────────┘
             │
             ▼
┌─────────────────────────┐
│ Non-coherent accumulation │
└─────────────────────────┘
             │
             ▼
┌─────────────────────────┐
│   ADP sorting and noise  │
│        Summation         │
└─────────────────────────┘
```

Fig. 2

```
┌────────────────────────────────────┐
│      Simplifying an algorithm       │ ⟵ 201
└────────────────────────────────────┘
                  │
                  ▼
┌────────────────────────────────────┐
│       Correlative  accumulation     │ ⟵ 202
└────────────────────────────────────┘
                  │
                  ▼
┌────────────────────────────────────┐
│     Frequency offset compensation   │ ⟵ 203
└────────────────────────────────────┘
```

Compensation result of                    Compensation result of
positive frequency offset                  negative frequency offset

```
   ┌──────────────┐               ┌──────────────┐
   │   Coherent   │               │   Coherent   │ ⟵ 204
   │ accumulation │               │ accumulation │
   └──────────────┘               └──────────────┘
          │                              │
          ▼                              ▼
   ┌──────────────┐               ┌──────────────┐
   │Phase rotation│               │Phase rotation│ ⟵ 205
   └──────────────┘               └──────────────┘
          │                              │
          ▼                              ▼
   ┌──────────────┐               ┌──────────────┐
   │Signature      │              │Signature      │ ⟵ 206
   │matching       │              │matching       │
   │and complex    │              │and complex    │
   │modulus        │              │modulus        │
   │calculation    │              │calculation    │
   └──────────────┘               └──────────────┘
          │                              │
          ▼                              ▼
   ┌──────────────┐               ┌──────────────┐
   │ Dual-antenna │               │ Dual-antenna │ ⟵ 207
   │   merging    │               │   merging    │
   └──────────────┘               └──────────────┘
          │                              │
          └──────────────┬───────────────┘
                         ▼
           ┌──────────────────────────┐
           │      Non-coherent        │ ⟵ 208
           │      accumulation        │
           └──────────────────────────┘
                         │
                         ▼
┌────────────────────────────────────┐
│  ADP sorting and noise summation    │ ⟵ 209
└────────────────────────────────────┘
```

Fig. 3

Fig. 4

```
┌─────────────────────────────────┐
│  Correlative accumulation unit   │
│              41                   │
└─────────────────────────────────┘
                 │
                 ▼
┌─────────────────────────────────┐
│      Compensation unit 42         │
└─────────────────────────────────┘
      │                      │
┌─────┼──────────────────────┼─────────────────┐
│     │   Concurrent processing │                │
│     │        unit 43          │                │
│     ▼                         ▼                │
│ ┌──────────────────┐  ┌──────────────────────┐ │
│ │First processing unit│ │ Second processing unit│ │
│ │       431          │  │         432          │ │
│ └──────────────────┘  └──────────────────────┘ │
└──────────────────────────┬─────────────────────┘
                           ▼
┌─────────────────────────────────────────┐
│ Non-coherent accumulation unit 44        │
└─────────────────────────────────────────┘
                           │
                           ▼
┌─────────────────────────────────────────┐
│ Sorting-and-noise-summation unit         │
│                45                         │
└─────────────────────────────────────────┘
```

**EP 2 725 839 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010215127 A1